# Europäisches Patentamt

## European Patent Office

## Office européen des brevets

(11) Veröffentlichungsnummer: **0 215 864**
**B1**

(12) # EUROPÄISCHE PATENTSCHRIFT

(45) Veröffentlichungstag der Patentschrift:
18.10.89

(51) Int. Cl.⁴: **F 28 C 1/00, F 28 F 25/12**

(21) Anmeldenummer: **86901844.0**

(22) Anmeldetag: **04.03.86**

(86) Internationale Anmeldenummer:
PCT/EP 86/00111

(87) Internationale Veröffentlichungsnummer:
WO 86/05577 (25.09.86 Gazette 86/21)

(54) RAUCHGASABLEITUNG ÜBER EINEN KÜHLTURM.

(30) Priorität: 16.03.85 DE 3509542
16.03.85 DE 3509543

(43) Veröffentlichungstag der Anmeldung:
01.04.87 Patentblatt 87/14

(45) Bekanntmachung des Hinweises auf die Patenterteilung:
18.10.89 Patentblatt 89/42

(84) Benannte Vertragsstaaten:
AT BE CH DE FR GB IT LI LU NL SE

(56) Entgegenhaltungen:
EP-A- 0 129 775
EP-A- 0 155 340
CH-A- 178 153
DE-A- 2 228 762
DE-A- 2 424 059
DE-A- 3 318 252
FR-A- 967 440
FR-A- 2 263 485
FR-A- 2 290 942
GB-A- 1 096 539

(73) Patentinhaber: Saarbergwerke Aktiengesellschaft,
Postfach 1030, Trierer Strasse 1 D-6600 Saarbrücken
(DE)

(72) Erfinder: JORZYK, Sigurd, Kaiserslauterner Strasse 36,
D-6600 Saarbrücken (DE)
Erfinder: SCHOLL, Gerhard, Robert-Koch-Strasse 8,
D-6683 Spiesen-Elversberg (DE)
Erfinder: HÖLTER, Heinz, Beisenstrasse 39-41,
D-4390 Gladbeck (DE)
Erfinder: IGELBÜSCHER, Heinrich,
Marcq-en-Baroeul-Strasse 60, D-4390 Gladbeck (DE)
Erfinder: GRESCH, Heinrich, Franz-Lehàr-Strasse 25,
D-4600 Dortmund-Wickede (DE)
Erfinder: DEWERT, Herlbert, Bahnhofstrasse 23,
D-4390 Gladbeck (DE)

(74) Vertreter: Spalthoff, Adolf, Dipl.-Ing. et al,
Pelmanstrasse 31 Postfach 34 02 20,
D-4300 Essen 1 (DE)

(56) Entgegenhaltungen: (Fortsetzung)
GB-A- 2 078 358
GB-A- 2 108 255
US-A- 3 841 208
US-A- 4 031 173
US-A- 4 397 793
B.W.K. Brennstoff-Wärme-Kraft, Band 37, Nr. 10,
Oktober 1985, VDI, Düsseldorf (DE), B. Leidinger et al.:
"Rauchgasableitung über Kühltürme", Seiten 373-379

**Beschreibung**

Die Erfindung betrifft einen Kühltrum für das aus dem Kondensator einer Dampfmaschine oder den Kondensatoren mehrerer Dampfmaschinen abfließende Kühlwasser, welcher mit großflächigen Einbauten versehen ist, die eine Wärmeaustauschzone bilden, denen das Kühlwasser zugeleitet wird und die im Gegenstrom zum Kühlwasser von einem aufsteigenden Luftstrom durchströmt sind, wobei der Kühlturm mit einer Rauchgaszuführung zur Einleitung gereinigter, vorzugsweise naßgereinigter, Rauchgase in den Kühlluftstrom ausgerüstet ist, welche mit einem oder mehreren Gasauslaßrohren verbunden ist, deren Austrittsquerschnitte oberhalb der Wärmeaustauschzone in den Kühlturm einmünden.

Die Einhaltung der in den Richtlinien zum Betreiben von Großfeuerungsanlagen festgelegten Grenzwerte für die Schadstoffkonzentrationen der in die Atmosphäre eingeleiteten Rauchgase kann in der Regel nur durch die Behandlung des gesamten aus der Feuerung kommenden Rauchgasstromes in einer Naßwäsche unter Zugabe von geeigneten Absorptionsmitteln erreicht werden. Das gereinigte Rauchgas verläßt die Rauchgasentschwefelungsanlage mit einer Temperatur von ca. 40 - 60 Grad C und muß daher vor seiner Einleitung in einen Kamin auf ca. 80 - 120 Grad C wieder aufgeheizt werden. Es liegt auf der Hand, daß hierzu ein erheblicher Energiebedarf erforderlich ist. Beispielsweise müssen bei einem 70 MW-Kraftwerk im Volllastbetrieb mehr als 2,5 Mio Kubikmeter Rauchgas pro Stunde aufgeheizt werden.

Zur Vermeidung der Wiederaufheizung von in Kraftwerken anfallenden Rauchgasen ist es durch die FR-A-2 290 942 bekannt, die gereinigten Rauchgase in den Kühlluftstrom oberhalb der Wärmeaustauschzone einzuleiten und die aufwärts strömende Kühlluft als Transportmedium zur Einleitung der gereinigten Rauchgase in die Atmosphäre zu benutzen. Dadurch entfällt die aufwendige Wiederaufheizung der Rauchgase. Bei neu zu bauenden Kraftwerken kann darüber hinaus auf den Bau eines Kamines verzichtet werden. Ein weiterer Vorteil dieses Verfahrens ist die zusätzliche Verdünnung der Rauchgase und somit auch der enthaltenen Restschadstoffkonzentration.

Voraussetzung ist jedoch eine gute und gleichmäßige Vermischung der eingeleiteten Rauchgase mit der aufwärtssteigenden Kühlluft.

Bei einer bekannten Anlage dieser Art erfolgt die Einleitung der Rauchgase in den Kühlluftstrom des Kühlturmes durch oberhalb der Wärmeaustauschzone im Bereich des Kühlturmzentrums angeordnete kaminartige Gasauslaßrohre, die mit einer zentralen Rauchgaszuführung verbunden sind. Die Endbereiche der Gasauslaßrohre sind abgewinkelt, so daß der Rauchgasstrahl eine radiale in den Kühlturmquerschnitt gerichtete Strömungskomponente, die unerläßlich für eine Durchmischung der Kühlluft ist, erhält. Zur Verbesserung der Rauchgasverteilung im Kühlluftstrom sind unmittelbar hinter dem Austrittsquerschnitt der Gasauslaßrohre diese im wesentlichen auf der Strahloberseite verlängernde, sich zum Ende hin verbreiternde und spiralartig verwundene Leitbleche angeordnet, die zu einer Verwirbelung des eingeleiteten Rauchgasstrahles und damit zu einer intensiven Vermischung mit der aufwärtsströmenden Kühlluft beitragen sollen. Diese Leitbleche, die in ihrem Endbereich nahezu normal zur Strömungsrichtung der Kühlluft sind, wirken sich jedoch nachteilig auf die Kühlluftströmung selbst aus. Zumindest ein Teil der aufwärtsströmenden Kühlluft wird umgelenkt und auch zusätzlich verwirbelt. Der damit für den Kühlluftstrom insgesamt verbundene Energieverlust führt letztendlich zu einer verringerten Austrittsgeschwindigkeit und in direkter Folge zu einer geringeren Steighöhe und verschlechterten Ausbreitung des am Kühlturmkopf austretenden Mischschwadens, was sich insbesondere bei austauscharmen Wetterlagen nachteilig auswirkt.

Darüber hinaus kann es, da der Rauchgasstrahl durch die Leitbleche relativ weit radial geführt wird, zum Auftreffen des unverdünnten Rauchgases auf die Kühlturmwand und dort infolge der Restschadstoffkonzentration zur Bildung von Säuretröpfchen kommen. Zur Vermeidung von Korrosionsschäden an der Kühlturmwand ist daher ein aufwendiger, teurer Schutzüberzug unbedingt erforderlich.

Durch die US-A-3 841 208 ist es bekannt, die Ableitung von Rauchgasen über einen Kamin vorzunehmen. Zu diesem Zwecke ist eine besondere Stützkonstruktion vorgesehen. Es findet ein zwangsangetriebener Ventilator Verwendung, der den Rauchgasen keinen Drall aufzwingt, sondern diesen vielmehr nur eine hohe Axialgeschwindigkeit verleiht.

Von diesem Stand der Technik ausgehend liegt der Erfindung die Aufgabe zugrunde, unter Vermeidung vorerwähnter Nachteile bei einem gattungsgemäßen Kühlturm eine verbesserte Anordnung zur Einleitung gereinigter Rauchgase in den Kühlluftstrom eines Kühlturmes anzugeben, die bei zumindest gleichgutem Durchmischungsgrad eine weitgehende verlustfreie Einleitung der gereinigten Rauchgase in den Kühlluftstrom ermöglicht. Darüber hinaus soll das Auftreffen unverdünnter Rauchgasstrahlen auf die Kühlturmwand und damit die Ablagerung von Säuretröpfchen vermieden werden.

Erfindungsgemäß wird dies dadurch erreicht,

a) daß in den Gasauslaßrohren im Bereich ihrer Austrittsquerschnitte Rotoren vorgesehen sind und die Gasauslaßrohre in ihren Endbereichen abwinkelbar sind und/oder

b) daß die Neigungswinkel alpha der Gasauslaßrohre veränderbar sind und jedes Gasauslaßrohr um seine Längsachse drehbar und in seinem Endbereich abwinkelbar ist.

Bei Durchströmen der Rotoren wird den austretenden Rauchgasstrahlen eine zusätzliche Rotationsbewegung aufgezwungen, die infolge der Verwirbelung am Strahlrand zu einer sehr guten Vermischung mit der aufwärtsströmenden Kühlluft führt, andererseits aber die Aufwärtsbewegung der Kühlluft selbst nicht behindert.

Durch den Wegfall der radialen Führung des Rauchgasstrahles durch die Leitbleche wird auch, neben der Vergrößerung des absoluten Weges des einzelnen Rauchgasteilchens infolge der aufgezwungenen zusätzlichen Kreisbewegung, der freie Weg des Rauchgasstrahles vergrößert, so daß die Gefahr, daß unverdünntes Rauchgas auf die Kühlturmwand auftrifft, beträchtlich vermindert wird.

Eine weitere Optimierung der Rauchgasverteilung wird durch die abwinkelbare Ausbildung der Gasauslaßrohre in ihren Endbereichen erreicht, so daß auch der Austrittswinkel des Rauchgasstrahles gegenüber der Vertikalen geändert werden kann.

Im einfachsten Fall können die Rotoren freilaufend, d.h. nur vom durchströmenden Rauchgas angetrieben, betrieben werden. Es wird dann dem Rauchgasstrom weder zusätzlich Energie zugeführt noch — abgesehen von den Reibungsverlusten des Rotors — entzogen. Die Drehzahl des Rotors und auch die Intensität der Drallbewegung hängt dann ausschließlich von der Ausbildung des Rotors, z.B. der Profilierung und der Einstellung der Rotorblätter und der Geschwindigkeit der Rauchgasströmung, ab.

Vorzugsweise weisen die Rotoren jedoch Regelantriebe auf, über die Änderung der Drehzahl können dann sowohl Axialgeschwindigkeit als auch Drallgeschwindigkeit des austretenden Rauchgasstromes beeinflußt und ggf. geänderten Betriebsbedingungen des Kühlturmes angepaßt werden. Insbesondere aber kann dadurch die Wurfweite des austretenden Rauchgasstrahles beeinflußt und so eingestellt werden, daß ein für eine gleichmäßige Verteilung der Rauchgase im Kühlluftstrom ausreichend große radiale Wegstrecke verfügbar ist, andererseits aber sichergestellt ist, daß der Rauchgasstrahl nicht auf die Kühlturmwand auftreffen kann. Die Drehzahlen der Rotoren können z.B. über einen Prozeßrechner gemeinsam oder auch einzeln abhängig von einer oder mehreren repräsentativen Führungsgrößen, z.B. der Austrittsgeschwindigkeit des Kühlturmschwadens, der Verteilung der Schadstoffkonzentration oder der Temperatur im Austrittsquerschnitt des Kühlturmes geregelt werden. Durch eine zusätzliche Überwachung des Säuregrades an oder nahe der Kühlturmwand wird dabei sichergestellt, daß die Wurfweite des Rauchgasstrahles begrenzt bleibt, und daß kein unverdünntes Rauchgas auf die Kühlturmwand auftrifft.

Dadurch, daß die Neigungswinkel der Gasauslaßrohre veränderbar sind, ergibt sich ein zusätzlicher Freiheitsgrad mit der Folge, daß die Strömungsrichtung des austretenden Rauchgases nunmehr sogar räumlich verändert werden kann, mit zusätzlichen Möglichkeiten zur Optimierung des Strömungsverlaufes im Kühlturm und somit auch das Ausbreitungsverhalten beim Eintritt in die Atmosphäre. Beispielsweise kann durch entsprechende Änderung des Neigungswinkels erreicht werden, daß die kinetische Energie der einzelnen Rauchgasströme zur Erhöhung der Geschwindigkeit der aufsteigenden Kühlluft und somit zur Verbesserung des Auftriebes im Kühlturm genutzt werden kann. Insbesondere bei ungünstigen Wetterlagen kann eine derartige Fahrweise von erheblichem Interesse sein.

Durch die Drehbarkeit der Gasauslaßrohre um ihre Längsachse, die z.B. durch einen einfachen Drehkranz herzustellen ist, kann bei feststehendem Neigungswinkel des Rohres gegen die Horizontale je nach den gerade vorliegenden Erfordernissen die Strömungsrichtung des aus einem Auslaßrohr austretenden Abgasstromes beliebig verändert werden. Daraus ergibt sich, daß in Abhängigkeit der jeweils gerade vorliegenden Strömungsgeschwindigkeiten einerseits der vertikal strömenden Kühlluft und andererseits des dazu abgewinkelt strömenden Rauchgasstromes eine Strömungsrichtung für den Rauchgasstrom eingestellt werden kann, die einen maximalen Strömungsweg des Rauchgases und damit eine optimale Durchmischung mit der Kühlluft gewährleistet, ohne daß das Gas dabei mit der Kühlturmwand in Berührung kommt.

Die Erfindung ermöglicht es somit auch, den Strömungsverlauf im Kühlturm im Hinblick auf unterschiedliche Lastzustände des Kraftwerkes zu optimieren.

Nach einem weiteren Merkmal der Erfindung sind die verschiedenen Auslaßrohre so eingestellt, daß die Endpunkte der Geschwindigkeitsvektoren der die Auslaßrohre verlassenden Rauchgasströme auf einem oder mehreren um die Achse des Kühlturmes verlaufenden konzentrischen Kreisen liegen. Hierdurch kann der gesamten durch den Kühlturm hindurchströmenden Gasmenge eine drehende, d.h. wirbelartige Bewegung überlagert werden. Ein derartiger Wirbel als relativ stabiles strömungsdynamisches Gebilde trägt dann dazu bei, daß die Ausbreitung in die Atmosphäre oberhalb des Kühlturmes weiter verbessert wird, da die Gasmischung aufgrund ihres wirbelartigen Strömungsverlaufes tiefer in die Atmosphäre eindringt als eine normale Strömung.

Zweckmäßigerweise erfolgt die Rauchgaszuführung über eine im Zentralbereich des Kühlturmes angeordnete Ringleitung, wobei die einzelnen Auslaßrohre nach oben gerichtet und entsprechend verteilt mit der Ringleitung verbunden sind, z.B. über geeignete Drehkränze. Bei einer solchen Anordnung kann es sich als zweckmäßig erweisen, die Rohre zusätzlich noch höhenverstellbar, z.B. mittels einer entsprechenden Teleskopanordnung, auszubilden.

Da der Querschnitt eines Kühlturmes aus strömungstechnischen Gründen bekanntlich nicht konstant ist, besteht durch die Höhenverstellbarkeit zusätzlich die Möglichkeit, die Auslaßrohre auch auf ein optimales Höhenniveau einzustellen. Unter Umständen kann es sich sogar als zweckmäßig erweisen, die Mündung der Auslaßrohre bis zu dem oberen Randbereich des Kühlturmes zu verschieben und die Rauchgase erst in dem turbulenten Übergangsbereich zwischen Kühlturm und Atmosphäre ausströmen zu lassen. Selbstverständlich kann die Höhenverstellbarkeit der einzelnen Rohre auch dann genutzt werden, wenn, z.B. bei Betriebsstörungen der Rauchgasentschwefelungsanlage, heiße, ungereinigte Rauchgase abgeleitet werden müssen, die auf keinen Fall mit der Kühlturmwand in Berührung kommen dürfen.

Anstelle im Zentralbereich des Kühlturmes kann eine als Rauchgaszuführung dienende Ringleitung auch im Umfangsbereich des Kühlturmes entlang der Innen- oder auch Außenseite der Kühlturmwand verlegt sein, wobei bei einer Anordnung außerhalb des Kühlturmes die einzelnen Gasauslaßrohre an vorgegebenen Stellen die Kühlturmwand durchstoßen.

Die Optimierung des Strömungsverlaufes der Kühlluft und des Rauchgases bzw. der Mischung aus Kühlluft und Rauchgas, z.B. auch bei unterschiedlichen Lastzuständen des Kraftwerkes, kann automatisch, z.B. mittels eines geeigneten Prozeßrechners, erfolgen. Dabei werden für den Strömungsverlauf bzw. die Ausbreitung oberhalb des Kühlturmes charakteristische Größen, wie z.B. die Austrittsgeschwindigkeit, die Konzentrationsverteilung und -änderung eines charakteristischen Rauchgasbestandteiles, z.B. $CO_2$ oder auch die $H_2SO_3$- oder $H_2CO_3$-Konzentration, an der Kühlturminnenwand gemessen und mit entsprechenden Sollwerten verglichen. Je nach den festgestellten Abweichungen kann dann die Einstellung der verschiedenen Auslaßrohre entsprechend geändert werden, z.B. mittels Stellmotoren, die durch den Prozeßrechner angesteuert werden.

Es ist auch möglich, die vorerwähnten Lösungen miteinander zu kombinieren.

Bei einer vorgeschalteten Rauchgasentschwefelungsanlage, die beispielsweise mit Kalkstein betrieben wird, beträgt der Feststoffgehalt im Waschwasser ca. bis zu 20%, d.h. 200 g/1 Waschflüssigkeit. Das bedeutet, daß durch das Gasauslaßrohr oder die Gasauslaßrohre trotz einer Entneblereinrichtung immerhin noch bis zu 600 kg Waschflüssigkeitsdurchriß mit 20% Feststoff = 120 kg Feststoff pro Stunde anfallen, die in den Kühlturm als Regen wieder zurückraufeln können. Bei einer Betriebszeit von 8000 Stunden pro Jahr ergibt dies 960 t Feststoff, die im Normalfall ohne Schadensvorfall durchgerissen werden und zu einem erheblichen Teil nicht nur die Entneblerpakete des bzw. der Gasauslaßrohre zum Teil verstopfen, sondern auch die angrenzenden Schwadenfänger im Kühlturm mit Belag überschütten, so daß zwischenzeitlich ein Reinigen der Schwadenfänger und Entneblerpakete während der Zeit, in der das Kraftwerk normalerweise mit höchster Verfügbarkeit laufen sollte, durchgeführt werden muß.

Um diesen Mangel zu beseitigen wird vorgeschlagen, daß in das Gasauslaßrohr bzw. in die Gasauslaßrohre in den Bereichen ihrer Austrittsquerschnitte Tropfenfängerpakete bzw. Entneblerpakete eingesetzt sind, denen sowohl auf ihren Anströmseiten als auch auf ihren Abströmseiten Düseneinrichtungen zugeordnet sind und eine Auffangeinrichtung für das Spülwasser der Tropfenfängerpakete bzw. der Entneblerpakete vorgesehen ist.

Durch die Anordnung der Düseneinrichtungen ist es möglich, daß die Tropfenfängerpakete bzw. die Entneblerpakete in periodischen Abständen von unten und von oben bespült werden können, und zwar mit einem relativ groben Tropfenspektrum, so daß die Wassermassen die agglomerierten Teile, die sich auf der Abströmseite abgelagert haben, nach unten durchspülen.

Mit der Auffangeinrichtung für das Spülwasser der Tropfenfängerpakete bzw. der Entneblerpakete ist es möglich, das Reinigungswasser der Entnebler- und Schwadenfängerpakete gesondert aufzufangen und dieses zur nochmaligen Benutzung der Entnebler- und Schwadenfängerpakete hinter der Rauchgasentschwefelungsanlage wieder einzusetzen, wodurch gewährleistet ist, daß mit vergleichsweise geringen Mengen an Frischwasser die vorhandenen Entneblerpakete und Schwadenfänger gereinigt werden können und das Abwasser nicht dem Waschprozeß übergeben wird, sondern getrennt ohne nennenswerte Additivprodukte, wie Polykarbonsäuren, EDTA und/oder NTA, als notwendige Wasserabgabe aus dem Prozeß ausgeschleust werden kann, ohne daß besondere biologische oder chemische Aufbereitungsanlagen erforderlich sind.

Nur in dem Fall, daß auch diese Tropfenwascheinrichtungen mit zusätzlichen Additiv-Wässern bespült werden, ist dieses Wasser einer gesonderten Wasseraufbereitung, z.B. einer biologischen oder chemischen Wasseraufbereitung, zuzuleiten.

Das Gasauslaßrohr bzw. die Gasauslaßrohre weisen in Strömungsrichtung der eingeleiteten Rauchgase gesehen im Anschluß an die Tropfenfängerpakete bzw. Entneblerpakete Querschnittsverjüngungen auf. Durch diese Querschnittsverminderung wird die Strömungsgeschwindigkeit erhöht, so daß die Tropfenbelastungsfeststoffe mit über die Ausbreitungssystemtechnik breitflächig über kilometerweite Strecken verteilt werden. Zu diesem Zwecke ist es vorteilhaft, Geschwindigkeiten anzusetzen, die mehrfach höher sind als sie im Kühlturm normalerweise üblich sind. Es besteht die Möglichkeit, nicht nur mit einer Rauchgaszuführung in den Kühlturm hineinzugehen, sondern mit mehreren, jedoch mit kleineren Durchmessern, die nach dem Durchbruch durch den Schwadenfänger zur Aufnahme der Tropfenfängerpakete vergrößert werden müssen, um sich anschließend wieder zu verengen.

Es ist auch möglich, mehrere Rauchgaszuführungen in einen größeren, zentralen Entnebler einmünden zu lassen, z.B. mittig im Kühlturm und von dort aus mit einem oder mehreren sich verjüngenden Gasauslaßrohren und hoher Geschwindigkeit in den Kühlturm oberhalb der Schwadenfänger das Rauchgas einzuleiten.

Um das Durchreißen des Wassers von Rauchgasentschwefelungsanlagen in Kühltürmen zu vermeiden ist es bekannt, unmittelbar hinter der Rauchgasentschwefelungsanlage vor dem Überleiten der Rauchgase in die Verbindungsreingasrohrleitung zum Kühlturm einen Tropfenabscheider anzusetzen. Die Kondensatbildung durch Abkühlen des Reingases auf dem Wege zum Kühlturm und die z.B. durchgerissenen 200 mg Resttropfen aus dem Tropfenabscheider hinter der Rauchgaswäsche — mit Feststoffen aus dem Rauchgaswaschsystem angereichert — bewirken eine erhebliche Belastung in der Rauchgaszuführung, welche in den Kühlturm mündet.

Um dieses zu vermeiden wird die Geschwindigkeit in der steigenden Rauchgaszuführung im Kühlluftturm so herabgesetzt, daß der anfallende Flüssigkeitsfilm in der Rauchgaszuführung bzw. in den Rauchgaszuführungen zu großen Tropfen neigt, die nicht von der Austrittsgeschwindigkeit mitgerissen und in den Kühlturm eingeleitet werden.

Wenn die Geschwindigkeit auf kleiner 8 m/sec, vorzugsweise um 5m/sec, gewählt wird, wird erreicht, daß der Flüssigkeitsfilm in dem bzw. den steigenden Rauchgaszuführungen als Grobtropfen nach unten fällt und keine Belastungen für die Tropfenabscheider am Ende bzw. an den Enden der Rauchgaszuführungen bewirkt.

Vorteilhaft wird vorgeschlagen, in den steigenden Rauchgaszuführungen an deren Innenwandungen tropfenbildende Nasen anzusetzen, die den Wandflüssigkeitsfilm zu Tropfen formen und diese nach unten in den Sumpf der Rauchgaszuführungen abtropfen lassen.

Ausführungsbeispiele der Erfindung sind anhand der Zeichnungen näher erläutert, und zwar zeigt:

Fig. 1 eine geschnittene Darstellung einer ersten Ausführungsform eines Kühlturms,

Fig. 2 eine geschnittene Ansicht einer zweiten Ausführungsform eines Kühlturms,

Fig. 3 eine Draufsicht einer dritten Ausführungsform eines Kühlturms,

Fig. 4 eine geschnittene Ansicht einer vierten Ausführungsform eines Kühlturms und

Fig. 5 eine geschnittene Ansicht einer fünften Ausführungsform eines Kühlturms.

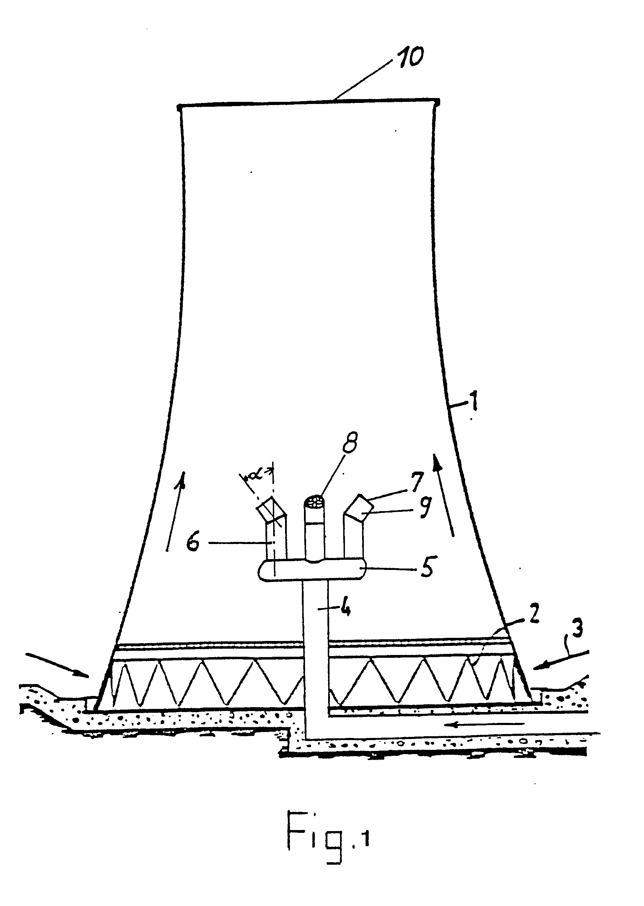

Bei der Ausführung nach Figur 1 wird die Wärmeaustauschzone 2 eines in der Figur beispielhaft dargestellten Kühlturmes 1 von der seitlich einströmenden Kühlluft 3 quer durchströmt. Die dort erwärmte Kühlluft steigt im Kühlturm 1 nach oben und wird am Kühlturmkopf 10 in die Atmosphäre abgegeben.

Die gereinigten Rauchgase werden über eine zentrale Rauchgaszuführung 4 und eine Ringleitung 5 zu den einzelnen Gasauslaßrohren 6 geführt und oberhalb der Wärmeaustauschzone 2 der im Kühlturm 1 aufwärtsströmenden Kühlluft zugemischt.

In den Gasauslaßrohren 6 sind im Bereich des Auslaßquerschnittes 7 Rotoren 8 angeordnet, die dem ausströmenden Rauchgas eine zusätzliche Drallströmung überlagern, die zu einer intensiven Vermischung der Rauchgase mit der aufsteigenden Kühlluft führt. Die Rotoren 8 weisen — in der Figur nicht dargestellte — Regelantriebe auf, die gemeinsam oder einzeln angesteuert werden können. Durch die Änderung der Drehzahlen der Rotoren 8 können die Axial- und Drallgeschwindigkeiten der Rauchgasströme unterschiedlichen Betriebszuständen des Kühlturmes 1 weitgehend angepaßt werden, wobei bei geeigneter Wahl der Führungsgröße und ggf. unter Zuhilfenahme eines Prozeßrechners die Wurfweite des Strahles, der Drallimpuls und somit die Verteilung der Rauchgase optimiert werden können, z.B. hinsichtlich des Profiles der Schadstoffkonzentration oder der Gasaustrittsgeschwindigkeit am Kühlturmkopf 10. Dabei kann durch eine weitere Überwachung des Säuregrades an oder nahe der Kühlturmwand die Wurfweite des Rauchgasstrahles so begrenzt werden, daß keine unverdünnten Rauchgase bis zur Kühlturmwand vordringen können.

Darüber hinaus sind die Endbereiche 9 der Gasauslaßrohre 6 gegenüber der Vertikalen abwinkelbar, so daß mit dem Austrittswinkel alpha des Rauchgasstrahles ein weiterer Parameter zur Optimierung der Rauchgaseinleitung und -verteilung zur Verfügung steht.

In den Ausführungsbeispielen gemäß Figur 1 und 2 sind die Gasauslaßrohre 6 im wesentlichen senkrecht und im Bereich des Kühlturmzentrums angeordnet. Die Einleitung der Rauchgase kann auch über eine an oder nahe der Kühlturmwand angeordnete Ringleitung und an diese angeschlossene Gasauslaßrohre erfolgen, wobei dann vorteilhafterweise die Gasauslaßrohre im wesentlichen horizontal angeordnet und ihre Endbereiche gegenüber der Horizontalen nach oben abwinkelbar sind.

Bei der Ausführung nach Figur 2 ist ein Kühlturm 1 eines Kohlekraftwerkes mit einem Rieselwerk 11 für den direkten Wärmetausch zwischen Kühlwasser und Luft gezeigt. Die Luft wird dem Kühlturm in Pfeilrichtung 12 zugeführt.

Gleichzeitig mit der Kühlluft werden dem Kühlturm 1 über die Rauchgaszuführung 4, welche in eine im Innenbereich des Kühlturmes angeordnete Ringleitung 5 mündet, naßgereinigte Rauchgase der Rauchgasentschwefelungsanlage des Kraftwerkes zugeführt. Aus der Ringleitung 5 gelangen die Rauchgase in die verschiedenen Gasauslaßrohre 6, die in ihrem Endbereich abgewinkelt sind und mit der Horizontalen den Winkel alpha bilden. Um eine optimale Durchmischung der Rauchgase mit der im Kühlturm aufströmenden Kühlluft in Abhängigkeit unterschiedlicher Betriebszustände des Kraftwerkes oder auch unterschiedlicher klimatischer Bedingungen zu erreichen, sind die verschiedenen Auslaßrohre um ihre Längsachse 13 drehbar ausgebildet. Darüber hinaus ist es möglich, den Winkel alpha zu verändern sowie die Gasauslaßrohre 6 in ihrer Höhe zu verstellen.

Zur Ermöglichung der Drehbarkeit, der Abwinkelbarkeit sowie der Höhenverstellbarkeit der Auslaßrohre 6 kann auf die üblichen Techniken, auf die hier im einzelnen nicht näher eingegangen zu werden braucht, zurückgegriffen werden.

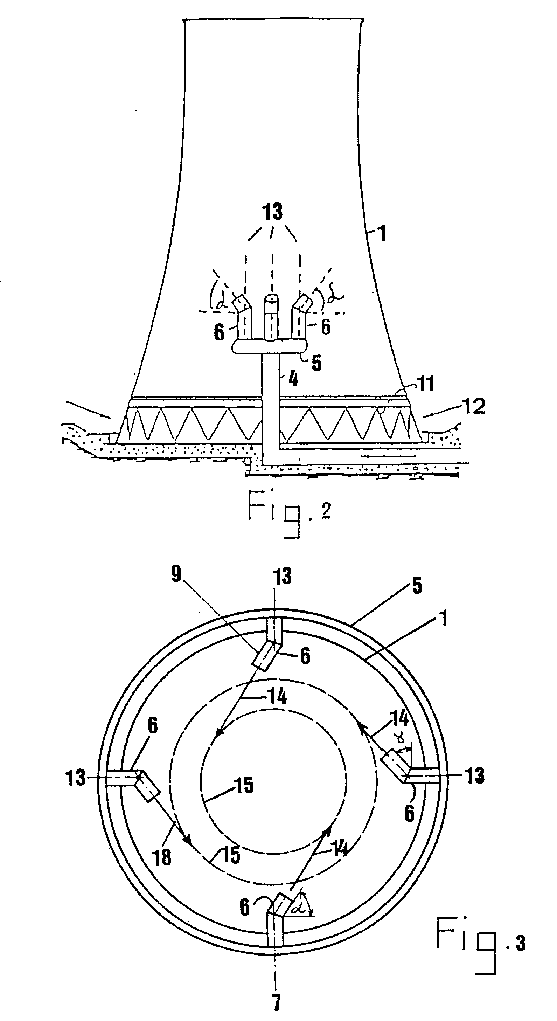

In Figur 3 ist eine Draufsicht auf eine weitere Ausführungsform der erfindungsgemäßen Anordnung gezeigt. Dabei ist die Ringleitung 5 als zentrale Rauchgaszufuhrleitung außerhalb des Kühlturmes 1 verlegt. Die jeweils um ihre Längsachse 13 drehbaren Gasaustrittsrohre 6, die im vorliegenden Ausführungsbeispiel die Kühlturmwand durchstoßen, sind in ihren Endbereichen 9 um die Winkel alpha derart abgewinkelt, daß die Geschwindigkeitsvektoren 14 der austretenden Gasströme auf zwei verschiedenen, um die Achse des Kühlturmes 1 verlaufenden konzentrischen Kreisen 15 enden. Auf diese Weise gelingt es, das im Kühlturm von unten nach oben strömende Gasgemisch in eine zirkulierende Bewegung zu versetzen.

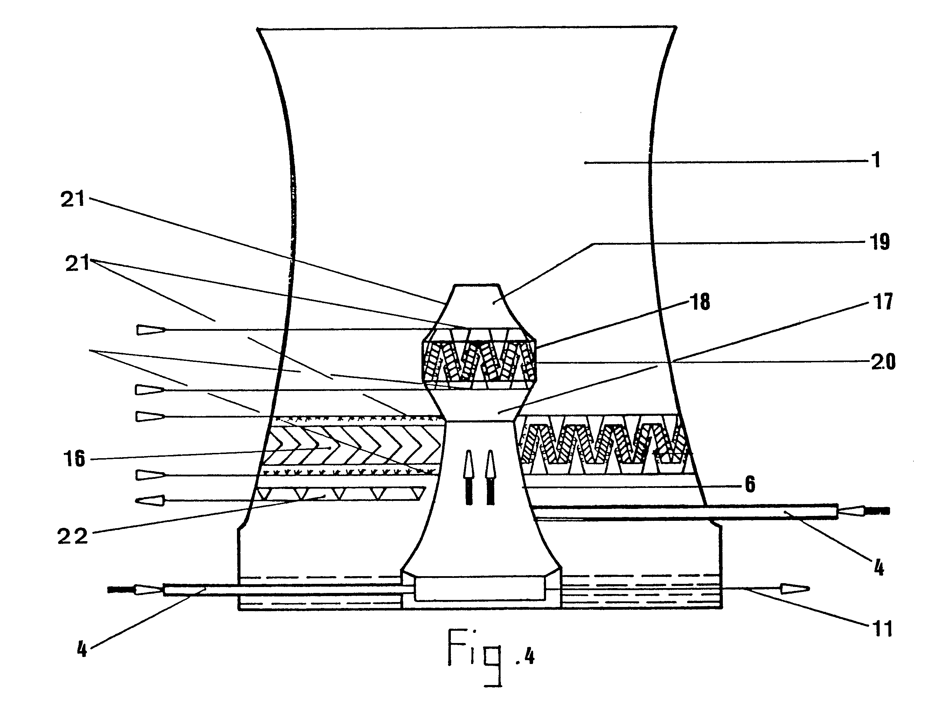

Bei der Ausführung nach Figur 4 ist mit 1 der Kühlturm bezeichnet, in den die Rauchgaszuführungen 4 einmünden.

Die Rauchgaszuführungen 4 gehen in ein mittig angeordnetes Gasauslaßrohr 6 über, welches die im Kühlturm 1 angeordneten Schwadenfänger 16 durchsetzt.

Das Gasauslaßrohr 6 besitzt einen sich erweiternden Abschnitt 17, der in einen erweiterten Abschnitt 18 übergeht, welcher hinwiederum in einen sich verjüngenden Abschnitt 19 übergeht. In dem sich erweiternden Abschnitt 18 befindet sich das Tropfenfängerpaket 20.

Sowohl auf der Anströmseite als auch auf der Abströmseite des Tropfenfängerpakets 20 bzw. der Entneblerpakete sind Düseneinrichtungen 21 vorhanden, was in gleicher Weise auch für die Schwadenfänger 16 gilt. Die Schwadenfänger 16, 20 sind als haubenförmige Schwadenfänger ausgeführt.

Unterhalb der Schwadenfänger 16 ist eine Auffangeinrichtung 22 für das Spülwasser der Tropfenfängerpakete 16, 20 vorgesehen.

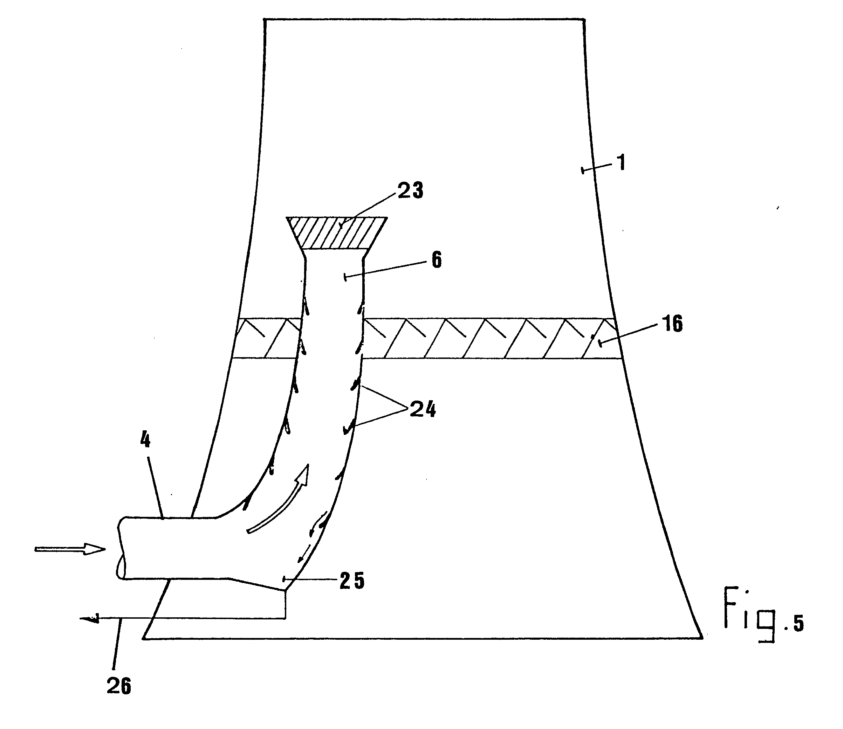

Bei der Ausführung nach Figur 5 ist der Kühlturm mit 1, die Schwadenfängerpakete mit 16 und die Rauchgaszuführung mit 4 bezeichnet. Die Gaszuführung 4 geht in das steigende Gasauslaßrohr 6 über, in dessen erweitertes Ende Tropfenabscheider 23 eingesetzt sind. In den Innenwandungen des Gasauslaßrohres 6 sind nasenförmige Ansätze 24 angebracht, welche zu Tropfenbildungen führen. Die Tropfen fallen in den Sumpf 25 und können aus diesem abgezogen werden, wie durch den Pfeil 26 angedeutet ist.

### Patentansprüche

1. Kühlturm für das aus dem Kondensator einer Dampfmaschine oder den Kondensatoren mehrerer Dampfmaschinen abfließende Kühlwasser, welcher mit großflächigen Einbauten versehen ist, die eine Wärmetauschzone bilden, denen das Kühlwasser zugeleitet wird und die im Gegenstrom zum Kühlwasser von einem aufsteigenden Luftstrom durchströmt sind, wobei der Kühlturm mit einer Rauchgaszuführung zur Einleitung gereinigter, vorzugsweise naßgereinigter, Rauchgase in den Kühlluftstrom ausgerüstet ist, welche mit einem oder mehreren Gasauslaßrohren verbunden ist, deren Austrittsquerschnitte oberhalb der Wärmeaustauschzone in den Kühlluftstrom einmünden, dadurch gekennzeichnet,

a) daß in den Gasauslaßrohren (6) im Bereich ihrer Austrittsquerschnitte (7) Rotoren vorgesehen und die Gasauslaßrohre (6) in ihren Endbereichen abwinkelbar sind und/oder

b) daß die Neigungswinkel alpha der Gasauslaßrohre (6) veränderbar sind und jedes Gasauslaßrohr (6) um seine Längsachse (13) drehbar und in seinem Endbereich abwinkelbar ist.

2. Kühlturm nach Anspruch 1, dadurch gekennzeichnet, daß die Gasauslaßrohre (6) höhenverstellbar sind.

3. Kühlturm nach Anspruch 1 oder 2, dadurch gekennzeichnet, daß die Rotoren (8) Regelantriebe aufweisen.

4. Kühlturm nach Anspruch 1 oder einem der vorhergehenden, dadurch gekennzeichnet, daß die Endpunkte der Geschwindigkeitsvektoren (14) der die Gasauslaßrohre (6) verlassenden Rauchgasströme auf einem oder mehreren um die Achse des Kühlturmes (1) verlaufenden konzentrischen Kreisen (15) liegen.

5. Kühlturm nach Anspruch 1 oder einem der vorhergehenden Ansprüche, dadurch gekennzeichnet, daß die Rauchgaszuführung als Ringleitung (5) außerhalb des Kühlturmes (1) auf dessen Mantel verlegt ist und die mit dieser in Verbindung stehenden Gasauslaßrohre (6) die Wandung des Kühlturmes radial durchsetzen.

6. Kühlturm nach Anspruch 1 oder einem der vorhergehenden, mit im Kühlturm vorgesehenen Schwadenfängern, dadurch gekennzeichnet, daß in das Gasauslaßrohr (6) oder die Gasauslaßrohre im Bereich ihres Austrittsquerschnittes bzw. in den Bereichen ihrer Austrittsquerschnitte Tropfenfängerpakete (20) bzw. Entneblerpakete eingesetzt sind, den Tropfenfängerpaketen (20) bzw. den Entneblerpaketen sowohl auf ihren Anströmseiten als auch auf ihren Abströmseiten Düseneinrichtungen (21) zugeordnet sind und eine Auffangeinrichtung (22) für das Spülwasser der Tropfenfängerpakete (16, 20) bzw. der Entneblerpakete vorgesehen ist.

7. Kühlturm nach Anspruch 6, dadurch gekennzeichnet, daß die Wasserbespülung auf den Abströmseiten der Tropfenfängerpakete (16, 20) bzw. Entneblerpakete mittels einer Grobtropfspüleinrichtung erfolgt.

8. Kühlturm nach Anspruch 6 oder 7, dadurch gekennzeichnet, daß das Gasauslaßrohr (6) bzw. die Gasauslaßrohre in Strömungsrichtung der eingeleiteten, gereinigten Rauchgase gesehen im Anschluß an die Tropfenfängerpakete (20) bzw. Entneblerpakete Querschnittsverjüngungen (19) aufweisen.

9. Kühlturm nach einem der Ansprüche 6 bis 8, dadurch gekennzeichnet, daß das Gasauslaßrohr (6) bzw. die Gasauslaßrohre an ihren Innenwandungen Nasen (24) aufweisen.

### Claims

1. Cooling tower for the cooling water flowing out of the condenser of a steam turbine or the condensers of several steaming turbines, which is provided with apparatus with a large surface area, which form a heat exchange zone, to which the cooling water is supplied and through which passes a rising air current in counterflow to the cooling water, wherein the cooling tower is equipped with a flue gas inlet for feeding scrubbed, preferably wet-scrubbed, flue gases into the cooling air flow, which is connected to one or more gas outlet pipes, whose exhaust apertures open into the cooling air flow above the heat exchange area, characterised in that,

a) rotors are provided in the gas outlet pipes (6) in the area of their exhaust apertures (7) and end sections of the gas outlet pipes (6) can be bent and/or

b) the angles of gradient alpha of the gas outlet pipes (6) are variable and each gas outlet pipe (6) can be pivoted around its longitudinal axis (13) and its end section can be bent.

2. Cooling tower according to Claim 1, characterised in that the gas outlet pipes (6) are vertically adjustable.

3. Cooling tower according to Claim 1 or 2, characterised in that the rotors (8) have a variable speed drive.

4. Cooling tower according to Claim 1 or any one of the preceding Claims, characterised in that the end points of the velocity vectors (14) of the flue gas flow leaving the gas outlet pipes (6) lie on one or several concentric circles (15) extending around the axis of the cooling tower (1).

5. Cooling tower according to Claim 1 or any one of the previous Claims, characterised in that the flue gas inlet as a ring conduit (5) is shifted outside the cooling tower (1) on its casing and which radially penetrates the wall of the cooling tower with these connecting gas outlet pipes (6).

6. Cooling tower according to Claim 1 or any one of the previous Claims, with vapour cloud catchers provided in the cooling tower, characterised in that drop catcher sets (20) and/or vapour removal sets are inserted into the gas outlet pipe(s) (6) in the region of their exhaust aperture(s), nozzle devices (21) are associated with the drop catcher sets (20) and/or vapour removal sets both on their leading and their trailing edges and a collecting device (22) is provided for the wash water of the drop catcher sets (16, 20) and/or vapour removal sets.

7. Cooling tower according to Claim 6, characterised in that the trailing edge of the drop catcher sets (16, 20) and/or vapour removal sets are rinsed by means of a large drop scrubbing mechanism.

8. Cooling tower according to Claim 6 or 7, characterised in that the gas outlet pipe(s) (6) for the scrubbed flue gas output viewed in the direction of flow have tapered cross sections in connection with the drop catcher sets (16, 20) and/or vapour removal sets.

9. Cooling tower according to any one of the Claims 6 to 8, characterised in that the gas outlet pipe(s) (6) has/have projections (24) on its/their inside walls.

## Revendications

1. Tour de refroidissement pour l'eau à refroidir s'écoulant du condenseur d'une machine à vapeur ou des condenseurs de plusieurs machines à vapeur, pourvue d'éléments incorporés à grande surface qui forment une zone d'échange de chaleur, auxquels est amenée l'eau à refroidir et à travers lesquels s'écoule, à contre-courant de l'eau à refroidir, un flux d'air ascendant, la tour de refroidissement étant équipée d'une amenée de gaz de fumée pour l'introduction de gaz de fumée épurés, de préférence par voie humide, dans le flux d'air de refroidissement, amenée qui est reliée à un ou plusieurs tuyaux d'évacuation de gaz, dont les sections de sortie débouchent au-dessus de la zone d'échange de chaleur dans le flux d'air de refroidissement, caractérisée par le fait

a) que des rotors sont prévus dans les tuyaux (6) d'évacuation de gaz dans la zone de leurs sections de sortie (7) et les tuyaux (6) d'évacuation de gaz peuvent être coudés dans leurs zones d'extrémité et/ou

b) que les angles d'inclinaison alpha des tuyaux (6) d'évacuation de gaz sont modifiables et chaque tuyau (6) d'évacuation de gaz est mobile en rotation autour de son axe longitudinal (13) et peut être coudé dans sa zone d'extrémité.

2. Tour de refroidissement selon la revendication 1, caractérisée par le fait que les tuyaux (6) d'évacuation de gaz sont réglables en hauteur.

3. Tour de refroidissement selon la revendication 1 ou 2, caractérisée par le fait que les rotors (8) présentent des moyens d'entraînement régulateurs.

4. Tour de refroidissement selon la revendication 1 ou l'une des revendications précédentes, caractérisée par le fait que les extrémités des vecteurs vitesse (14) des flux de gaz de fumée quittant les tuyaux (6) d'évacuation de gaz se trouvent sur un ou plusieurs cercles concentriques (15) tournant autour de l'axe de la tour de refroidissement (1).

5. Tour de refroidissement selon la revendication 1 ou l'une des revendications précédentes, caractérisée par le fait que l'amenée de gaz de fumée est installée sous forme de conduite annulaire (5) à l'extérieur de la tour de refroidissement (1) sur la chemise de celle-ci, et les tuyaux (6) d'évacuation de gaz reliés à l'amenée traversent radialement la paroi de la tour de refroidissement.

6. Tour de refroidissement selon la revendication 1 ou l'une des revendications précédentes, comprenant des éléments d'arrêt de la vapeur prévus dans la tour de refroidissement, caractérisée par le fait que des paquets d'éléments d'arrêt de gouttes (20) ou des paquets anti-brouillard sont insérés dans le(s) tuyau(x) (6) d'évacuation de gaz, dans leur(s) zone(s) de section de sortie, des dispositifs à tuyère (21) sont associés aux paquets d'éléments d'arrêt de gouttes (20) ou aux paquets anti-brouillard, aussi bien côté admission que côté écoulement de ceux-ci, et un dispositif collecteur (22) est prévu pour l'eau de rinçage des paquets (16, 20) d'éléments d'arrêt de gouttes ou des paquets anti-brouillard.

7. Tour de refroidissement selon la revendication 6, caractérisée par le fait que le rinçage à l'eau côté écoulement des paquets (16, 20) d'éléments d'arrêt de gouttes ou des paquets antibrouillard se fait au moyen d'un dispositif de rinçage à grosses gouttes.

8. Tour de refroidissement selon la revendication 6 ou 7, caractérisée par le fait qu'à la suite des paquets (20) d'éléments d'arrêt de gouttes ou des paquets anti-brouillard, le(s) tuyau(x) (6) d'évacuation de gaz présente(nt), vu dans le sens d'écoulement des gaz de fumée épurés introduits, des réductions de section (19).

9. Tour de refroidissement selon l'une des revendications 6 à 8, caractérisée par le fait que le(s) tuyau(x) (6) d'évacuation de gaz présente(nt) des becs (24) sur leurs parois intérieures.

Fig. 1

Fig. 2

Fig. 3

Fig.4

EP 0 215 864 B1

Fig.5